(19) **Europäisches Patentamt**

**European Patent Office**

**Office européen des brevets**

(11) **EP 0 829 545 B1**

(12) **FASCICULE DE BREVET EUROPEEN**

(45) Date de publication et mention
de la délivrance du brevet:
**18.07.2001 Bulletin 2001/29**

(51) Int Cl.⁷: **C21C 5/54**, C21C 5/52

(21) Numéro de dépôt: **97401961.4**

(22) Date de dépôt: **21.08.1997**

(54) **Procédé pour réaliser un laitier moussant au-dessus d'un acier inoxydable en fusion dans un four électrique**

Verfahren zum Erzeugen einer Schaumschlacke auf einer Rostfrei-Stahlschmelze in einem Elektroofen

Process for making a foaming slag on a stainless steel melt in an electric furnace

(84) Etats contractants désignés:
**AT BE CH DE DK ES FI FR GB GR IE IT LI LU NL PT SE**

(30) Priorité: **12.09.1996 FR 9611120**

(43) Date de publication de la demande:
**18.03.1998 Bulletin 1998/12**

(73) Titulaires:
• **UGINE S.A.**
**92800 Puteaux (FR)**
• **UGINE-SAVOIE IMPHY**
**73400 Ugine (FR)**

(72) Inventeurs:
• **Guillot, Yves**
**73400 Ugine (FR)**
• **Descaves, Frédéric**
**62330 Molinghem (FR)**
• **Sollier, Luc**
**73600 Moutiers (FR)**
• **Bletton, Olivier**
**73400 Ugine (FR)**

(74) Mandataire: **Ventavoli, Roger et al**
**USINOR,**
**Direction Propriété Industrielle,**
**Immeuble "La Pacific",**
**La Défense,**
**11/13 Cours Valmy,**
**TSA 10001**
**92070 La Défense (FR)**

(56) Documents cités:
EP-A- 0 162 679          EP-A- 0 655 508
LU-A- 88 577             US-A- 4 528 035

• **DATABASE WPI Section Ch, Week 7808 Derwent Publications Ltd., London, GB; Class M24, AN 78-14675A XP002031889 & JP 53 001 618 A (NISSHIN STEEL CO LTD) , 9 janvier 1978**

**Description**

La présente invention concerne un procédé pour réaliser un laitier moussant au-dessus d'un acier inoxydable en fusion dans un four électrique.

Dans le domaine de la fusion des aciers inoxydables en four électrique, la charge du four du type ferrailles, chutes, ferro alliages, est transformée en métal liquide grâce à la génération d'arcs électriques entre des électrodes du four et ladite charge.

L'élaboration de l'acier génère des produits résiduels comme des poussières récupérées par les dépoussiéreurs, dont environ 90% sont recyclés sous forme de boulets réintroduits dans le four électrique, les 10% restant, contenant trop d'oxyde de zinc, sont actuellement stockés. Le laitier est éliminé après fusion.

Dans le domaine de la fusion des aciers non inoxydables, le principe du laitier moussant est basé sur la réduction de l'oxyde de fer contenu dans le laitier utilisé. La réduction de l'oxyde de fer est effectuée par injection, dans le four, de poudre de carbone, réduction qui génère du monoxyde de carbone. Les bulles de monoxyde de carbone piégées dans le laitier en fusion font mousser celui-ci et augmente de façon conséquente son volume. Le laitier sous forme de mousse enrobe l'extrémité de l'électrode et protège du rayonnement électrique les réfractaires, ce qui permet une économie, sur la consommation de l'électrode, sur la consommation électrique, sur la consommation des réfractaires.

Dans le cas de la fusion des aciers inoxydables, le laitier n'est pas assez riche en oxyde de fer et, de ce fait, le principe du laitier moussant utilisé dans l'élaboration des aciers non inoxydables n'est plus applicable.

Il est enseigné dans le document EP-A-655508 que dans la production d'un acier inoxydable au moyen d'un four à arc électrique il est possible d'utiliser un laitier moussant.

Le but de l'invention est de proposer un procédé pour générer un laitier moussant contrôlé est stable au-dessus d'un acier inoxydable en fusion, dans un four électrique, en modifiant le laitier de façon à créer un moussage dans ledit laitier.

L'invention a pour objet un procédé pour réaliser un laitier moussant au-dessus d'un acier inoxydable en fusion dans un four électrique caractérisé en ce que :

- on introduit dans le laitier, une poudre, contenant dans sa composition au moins un l'oxyde métallique choisi parmi l'oxyde de zinc, l'oxyde de plomb et du carbone,
- on réduit au moins ledit oxyde contenu dans la poudre par la réaction de celui ci avec le carbone pour former, dans le laitier des bulles composées essentiellement du métal à l'état gazeux de l'oxyde et de monoxyde de carbone, les bulles contenues dans le laitier générant un laitier sous la forme d'une mousse stable.

Les autres caractéristiques de l'invention sont :

- au moins une partie de la poudre est issue de poussières générées par le four électrique d'élaboration de l'acier.
- la poudre est introduite par injection sous un fluide sec.
- le fluide est choisi parmi l'azote, l'argon.

La description qui suit fera bien comprendre l'invention.

La présente invention concerne un procédé pour réaliser un laitier moussant au-dessus d'un acier inoxydable en élaboration, dans un four électrique.

Selon l'invention il est introduit dans le four d'élaboration de l'acier inoxydable et dans le laitier, un oxyde métallique et du carbone, sous forme d'une poudre, oxyde métallique qui par sa réduction avec le carbone, forme d'une part, un gaz de l'élément métallique de l'oxyde et d'autre part, du monoxyde de carbone, les bulles générées par ces gaz, piégées dans le laitier, générant un laitier sous forme de mousse stable.

Selon l'invention la poudre contient dans sa composition de l'oxyde de zinc. La poudre est constituée de poussières de four électrique fortement zinguées résultant de l'enrichissement progressif en ZnO desdites poussières au cours de leur recyclage dans l'aciérie.

L'usage des poussières de four électrique, fortement zinguées, permet l'utilisation d'un co-produit issu de l'élaboration de l'acier inoxydable. L'élément zinc de l'oxyde de zinc utilisé de préférence, participe à la formation du bullage puisque à la température du laitier le zinc est à l'état gazeux.

L'oxyde de zinc est réduit par le carbone pour donner le zinc gazeux et du monoxyde de carbone qui tout deux vont provoquer le moussage du laitier suivant la réaction:

$$ZnO + C \Rightarrow Zn + CO$$

Dans un exemple d'application, on injecte, dans le four électrique, au moyen d'une machine à injecter, de 500 Kg à 1000 Kg de poudre fortement zinguée. Le fluide d'injection est de préférence de l'azote pour éviter les risques d'explosion du fait de l'humidité de l'air.

selon l'invention le laitier de base pour l'élaboration des aciers inoxydables est composé de 35% à 40% % de $SiO_2$; de 40% à 45% de CaO; de 5% de $Cr_2O_3$; de 5% d'$Al_2O_3$; le reste étant formé de quelques % de MnO et de MgO, et de moins de 1% de FeO. Ce laitier ne contient pratiquement pas d'oxyde de fer.

Il est constaté, du fait de la réduction de l'oxyde de zinc par le carbone et des gaz résultant, une augmentation de l'épaisseur du laitier de base qui atteint plusieurs dizaines de centimètres, le laitier sous la forme de mousse enrobant l'électrode d'alimentation en courant. Le moussage de laitier obtenu est maîtrisé et stable.

**Revendications**

1. Procédé pour réaliser un laitier moussant au-dessus d'un acier inoxydable en fusion dans un four électrique caractérisé en ce que:

   - on introduit dans le laitier, une poudre, contenant dans sa composition au moins un l'oxyde métallique choisi parmi l'oxyde de zinc, l'oxyde de plomb et du carbone,
   - on réduit au moins ledit oxyde contenu dans la poudre par la réaction de celui ci avec le carbone pour former, dans le laitier des bulles composées essentiellement du métal à l'état gazeux de l'oxyde et de monoxyde de carbone, les bulles contenues dans le laitier générant un laitier sous la forme d'une mousse stable.

2. Procédé selon la revendication 1 caractérisé en ce qu'au moins une partie de la poudre est issue de poussières générées par le four électrique d'élaboration de l'acier.

3. Procédé selon les revendications 1 et 2 caractérisé en ce que la poudre est introduite par injection sous un fluide sec.

4. Procédé selon les revendications 1 et 3 caractérisé en ce que le fluide est choisi parmi l'azote, l'argon.

**Patentansprüche**

1. Verfahren zur Herstellung einer Schaumschlacke auf schmelzflüssigem rostfreiem Stahl in einem Elektroofen, dadurch gekennzeichnet, dass

   - in die Schlacke ein Pulver eingeführt wird, das in seiner Zusammensetzung zumindest ein Metalloxid, gewählt aus Zinkoxid und Bleioxid, sowie Kohlenstoff enthält,
   - und zumindest das in dem Pulver enthaltene genannte Oxid reduziert wird, indem es mit dem Kohlenstoff reagiert, um in der Schlacke Blasen zu bilden, die im wesentlichen aus dem Metall des Oxids im gasförmigen Zustand und Kohlenmonoxid bestehen, wobei die in der Schlacke enthaltenen Blasen eine Schlacke in Form eines stabilen Schaums erzeugen.

2. Verfahren nach Anspruch 1, dadurch gekennzeichnet, dass zumindest ein Teil des Pulvers aus Stäuben hervorgegangen ist, die durch den Stahlerzeugungs-Elektroofen erzeugt wurden.

3. Verfahren nach Anspruch 1 und 2, dadurch gekennzeichnet, dass das Pulver durch Einspritzung unter ein trockenes Fluid eingeführt wird.

4. Verfahren nach Anspruch 1 und 3, dadurch gekennzeichnet, dass das Fluid zwischen Stickstoff und Argon gewählt wird.

**Claims**

1. Process for producing a foaming slag above a stainless steel melted in an electric furnace, characterized in that:

   - a powder containing at least one metal oxide chosen from zinc oxide and lead oxide, and carbon in its composition is introduced into the slag,
   - at least the said oxide present in the powder is reduced by its reaction with the carbon to form in the slag bubbles composed essentially of the metal in the gaseous state of the oxide and of carbon monoxide, the bubbles present in the slag giving rise to a slag in the form of a stable foam.

2. Process according to Claim 1, characterized in that at least a portion of the powder originates from dust generated by the electric furnace for producing the steel.

3. Process according to Claims 1 and 2, characterized in that the powder is introduced by injection under a dry fluid.

4. Process according to Claims 1 and 3, characterized in that the fluid is chosen from nitrogen and argon.